# EUROPEAN PATENT SPECIFICATION

(11) **EP 0 793 683 B1**
(45) Date of publication and mention of the grant of the patent: **06.02.2002**
(21) Application number: 95940048.2
(22) Date of filing: 16.11.1995
(51) Int. Cl.: C08G 69/28

(54) **LOW TEMPERATURE MANUFACTURING PROCESS FOR NYLON**
NIEDRIGTEMPERATUR-HERSTELLUNGSPROZESS FÜR POLYAMID
PROCEDE DE FABRICATION DU NYLON A BASSES TEMPERATURES

(30) Priority: 23.11.1994 US 344803
(43) Date of publication of application: 10.09.1997
(73) Proprietor: E.I. DU PONT DE NEMOURS AND COMPANY, Wilmington Delaware 19898 (US)
(72) Inventor: LANG, James, Joseph, Wilmington, DE 19806-1203 (US)
(74) Representative: Jones, Alan John
(86) International application number: PCT/US95/15060
(87) International publication number: WO 96/16108

(56) References cited:
- EP-A- 0 001 157
- EP-A- 0 680 987
- EP-A- 0 705 867

## Description

### FIELD OF THE INVENTION

This invention concerns a low temperature process for the manufacture of nylon.

### TECHNICAL BACKGROUND

Some commercially important polyamides, referred herein to as dimonomeric polyamides, require starting monomers of two kinds, one monomer having two carboxylic acid functional reactive groups (diacid) and the other monomer having two amino functional reactive groups (a diamine). In the most common method of preparing dimonomeric polyamides, the starting diacid and diamine components are mixed in stoichiometric proportions in a solution containing a large amount of water, typically up to as much weight of water as the combined weight of the diacid and diamine components. This water is subsequently removed by evaporation which requires a large amount of energy. The evaporation of water is usually done at elevated pressure in order to achieve a high enough boiling temperature to prevent the formation of solids. After the evaporation, there must be a pressure reduction step which requires heat to prevent the product from solidifying. The heating is known to cause discoloration and chemical degradation of the product.

Attempts to produce dimonomeric polyamides without the use of water or other solvents have usually been unsuccessful. If one component is a solid, it is difficult to accurately proportion the solid component. If both components are supplied as liquids (melt), these liquids may experience degradation, as a result of the high temperature required to keep the components in melt form.

United States Patent No. 4,131,712 endeavors to overcome these difficulties. This patent teaches a process for the preparation of a high molecular weight polyamide, wherein a diacid-rich component and a diamine-rich component are prepared separately in non-stoichiometric proportions and then the diacid-rich component and the diamine-rich component are contacted in the liquid state at high enough temperature to prevent solidification. When the proportions of the total amounts of diacid and diamine are as much as possible stoichiometric, the molten components are further heated together to cause polycondensation to form a high molecular weight polyamide. The major utility of the process is in the manufacture of nylon 66.

U.S. 4,131,712 identifies the low melting temperature for acid-rich and diamine-rich compositions for which substantial dehydration is avoided. U.S. 4,131,712 also identifies the temperatures required to prevent solidification at complete dehydration for each diacid-rich composition and each diacid-rich composition and for each combined proportion of diacid-rich component and diamine-rich component obtained by contacting portions of the diacid-rich component with portions of the diamine-rich component. For a given combined proportion of diacid-rich component and diamine-rich component, the melting temperature at complete dehydration is defined as the temperature which prevents solidification at complete dehydration.

U.S. Patents 4,433,146 and 4,438,257, teach the use of a partial condenser to condense diamine out of vapor leaving the reaction mixture so as to return the diamine to the reaction mixture. However, the procedure, if used on a commercial scale, with stepwise addition of diamine, appears to require extended periods of time to recycle the diamine.

### SUMMARY OF THE INVENTION

The present invention provides a process for the preparation of nylon 66 in the absence of added aqueous or organic solvents at low temperatures and low pressures. This process can achieve stoichiometric balance of non-stoichiometric components at temperatures which avoid vaporization of diamine while the vaporization of water formed in the dehydration reaction is not avoided. An adipic acid-rich component is contacted with a hexamethylenediamine-rich component in the melt state at an intermediate degree of dehydration at temperatures which retain the melt state of the combined proportions of the adipic acid-rich component and the hexamethylenediamine-rich component and which are stable to solidification but which are below the high temperatures required to prevent solidification at complete dehydration.

The method steps consist of the following:
1. providing an adipic acid-rich component which may be adipic acid, which may be in the solid or in the melt state, or adipic acid with hexamethylene diamine in a total diacid to total diamine mole ratio greater than one, in the melt state;
2. providing a hexamethylenediamine-rich component which may be hexamethylene diamine, which may be in the solid or in the melt state, or hexamethylene diamine and adipic acid in a total diamine to total dicarboxylic acid mole ratio, whether free or chemically combined, of greater than one, in the melt state;
3. contacting the adipic acid-rich component with the hexamethylenediamine-rich component in one or more steps such that the temperature is sufficient to retain the resulting mixture in a melt state but is at a temperature lower than that required to prevent solidification at complete dehydration, for the combined proportions of adipic acid and hexamethylenediamine, and for which the evaporation of diamine is avoided; and
4. after stoichiometric balance is achieved, applying heat to the resulting mixture to cause polycondensation to a high molecular weight polyamide.

### DETAILED DESCRIPTION OF THE INVENTION

In the process above, the hexamethylenediamine-rich component and the adipic acid-rich component can be contacted continuously or in one or more discrete steps until sufficient amounts of the adipic acid-rich and the hexamethylenediamine-rich components have been added to achieve stoichiometric balance. Contacting the adipic acid-rich and the hexamethylenediamine-rich components at melt temperatures can result in dehydration of the components. Prior to complete dehydration, there is an intermediate degree of hydration. The term "intermediate degree of hydration" describes a state between a first state where no reaction has occurred, i.e. no dehydration, and a second state at which dehydration is complete.

Prior to achieving stoichiometric balance, temperatures which retain the combined proportions of adipic acid and hexamethylenediamine components in the melt state will also cause dehydration of the components. Temperatures lower than those which will prevent solidification at complete dehydration for the combined proportion of adipic acid and hexamethylenediamine are sufficient to retain the combined proportion of adipic acid and hexamethylenediamine in the melt state while the rate of dehydration is slow enough so that complete dehydration is avoided and solidification will not occur over reasonable periods of time sufficient for commercial processing. These temperatures are low enough so that hexamethylene diamine vaporization is avoided.

For non-stoichiometric and for stoichiometric combined proportions of the adipic acid and hexamethylenediamine components, lower processing temperatures are possible which retain the mixture in the melt state and keep the mixture stable to solidification even at temperatures which surprisingly are below the low melting temperatures where complete dehydration is avoided. At the low temperatures and low pressures possible, water formed by dehydration will vaporize and only a small amount of water will be present in the liquid melt. Also, the temperatures taught herein can avoid the vaporization of diamine.

When stoichiometric balance has been achieved, further dehydration is required to form a high molecular weight polyamide. The further dehydration can be achieved by conventional or other means.

This process is based on the discovery that an adipic acid-rich component can be contacted with a hexamethylenediamine-rich component, in the absence of water or organic solvent, to form a melt possessing an intermediate degree of dehydration at surprisingly low temperatures. Before stoichiometric balance required to form high molecular weight polyamide is achieved, these temperatures may be lower than those required to prevent solidification at complete dehydration and even below those low melting temperatures for which complete dehydration is avoided.

When stoichiometric balance of the adipic acid-rich component and the hexamethylenediamine-rich component required to achieve high molecular weight polyamide is achieved, the mixture can be held in the melt state at temperatures below the melt temperature where complete dehydration is avoided. That is, for example, a substantially balanced mixture of adipic acid and hexamethylenediamine, nylon 66 salt, at an intermediate degree of dehydration can be held in the melt state at temperatures below that of the melting temperature where complete dehydration is avoided, as defined in U.S. 4,131,712.

Because the melting temperature for a given combined proportion of adipic acid and hexamethylenediamine components at an intermediate degree of dehydration can be surprisingly low and because the rate of reaction to increase the degree of dehydration can be relatively slower at lower temperatures, a process disclosed as operating at temperatures lower than those required to prevent solidification at complete dehydration can still be a process stable to solidification. The process of the present invention operates at temperatures lower than those required to prevent solidification at complete dehydration.

Process temperatures which are significantly lower than those required to prevent solidification at complete dehydration can reduce thermal exposure and can be low enough to avoid significant diamine vaporization at low pressure, even as the proportions of adipic acid and hexamethylenediamine components approach stoichiometric balance. Low diamine loss helps to control compositional balance without the need for additional condensation or high pressure equipment, and avoids prolonged process time, prolonged thermal exposure, and possible increased degradation.

The process involves contacting an adipic acid-rich component and a hexamethylenediamine-rich component in one or more steps so that the combined proportion of the adipic acid-rich and hexamethylenediamine-rich components approaches stoichiometric proportion. The temperature for one or more combined proportions of adipic acid and hexamethylenediamine components is lower than the temperature disclosed as required to prevent solidification at complete dehydration for that combined proportion and the pressure for that combined proportion of adipic acid and hexamethylenediamine components may be atmospheric or near atmospheric.
The temperature needed to retain a melt for a combined proportion of adipic acid and hexamethylenediamine will depend on the particular proportion of adipic acid and hexamethylenediamine and on the degree of dehydration. The temperature needed to retain a melt may change as the combined proportion of adipic acid and hexamethylenediamine or as the degree of dehydration changes so that the temperature may not be held constant, but for at least a single combined proportion of adipic acid and hexamethylenediamine at some point in time will be below that required to prevent solidification at complete dehydration.

The "degree of dehydration" is the fraction of the maximum potential reactive ends of the minority diacid or diamine component which have undergone a water forming reaction to form a chemical combination with the majority component. The number of potential reactive ends can be calculated from the mass of the diacid or diamine component added, and their respective molecular weights. The number of chemically unreacted ends can be found by titration.

### EXAMPLE 1

Molten, anhydrous hexamethylenediamine (HMD) was added to an agitated reaction vessel containing 225 grams of a molten acid rich mixture consisting of 81% by weight of adipic acid and 19% by weight of hexamethylenediamine at 145°C. The reactor pressure was 9 psig, maintained by a slight nitrogen flow to the reactor. While adding HMD to the reactor, the temperature never exceeded 184°C. After 102 grams of HMD were added to the vessel, a sample was taken from the vessel. The vessel temperature at the time the sample was taken was 168°C, and the vessel contents were clear and boiling was occurring. Since vaporization of HMD at this temperature is known to be minimal, the boiling is indicative of reaction (dehydration) occurring which liberates water as a by-product and must be removed. Testing of the sample taken indicates a substantially balanced composition with a water content of 0.73% by weight and with a degree of dehydration of 0.39. The reactor contents were subsequently heated to high temperatures to form a high molecular weight polyamide.

This example illustrates the ability to balance an acid-rich component with a diamine-rich component at low pressures and at temperatures low enough to avoid substantial diamine vaporization en route to forming high molecular weight polyamide. The temperatures for non-stoichiometric, combined proportions of the diacid-rich component and the diamine-rich component are lower than those required to prevent solidification at complete dehydration, while for substantially stoichiometric proportions and a degree of dehydration of 0.39, the temperature of 168°C is significantly lower than that where substantial dehydration is avoided which is about 195-200°C.

### EXAMPLE 2

An acid rich mixture of 158.3 grams comprising 81% adipic acid and 19% HMD by weight was melted in the reaction vessel of Example 1. Molten anhydrous HMD at 50°C was added to the reaction vessel. The vessel pressure was atmospheric. When a substantially balance proportion was reached, the temperature was 180°C and a sample was taken. Twenty minutes later, the vessel was clear, the vessel temperature was 170°C, and another sample was taken. The first sample indicates a degree of dehydration of 0.26 and the latter sample indicates a degree of dehydration of 0.47.

This example illustrates the ability to balance an acid-rich component with a diamine-rich component at atmospheric pressure and at temperatures low enough to avoid substantial diamine vaporization. The temperatures for non-stoichiometric, combined proportions of the diacid-rich component and the diamine-rich component are lower than those required to prevent solidification at complete dehydration, while for substantially stoichiometric proportions at an intermediate degree of dehydration, the temperature is slightly lower than that where substantial dehydration is avoided. This example also illustrates the ability to hold the combined proportions of diacid and diamine components for a length of time of 20 minutes at low temperatures without solidification occurring.

### EXAMPLE 3

Molten, anhydrous hexamethylenediamine was added to an agitated reaction vessel containing a molten acid rich mixture consisting of 81% by weight of adipic acid and 19% by weight of HMD at atmospheric pressure. Addition of HMD was stopped before stoichiometric proportions were reached. A sample was taken 10 minutes after HMD addition was discontinued. The vessel temperature at the time the sample was taken was 162°C. The sample indicates a combined molar proportion of 54.8% adipic acid and a degree of dehydration of 0.48.

Comparison of this example with Example 4 of U.S. 4,131,712 at a combined molar proportion of 57.1% adipic acid and a temperature of 250°C which is disclosed as the temperature required to prevent solidification at complete dehydration illustrates the ability to operate at temperatures significantly lower than those disclosed as required to prevent solidification at complete dehydration and the benefit of operating at lower temperatures since HMD will vaporize when added to a mixture at a temperature of 250°C. This example also illustrates that for a non-stoichiometric proportion of 54.8% adipic acid and an intermediate degree of dehydration, operating temperatures stable to solidification can be lower than the melt temperatures where substantial dehydration is avoided, i.e. about 185°C.

## Claims

1. A process for manufacturing nylon 66 consisting of:
(a) providing an adipic acid-rich component in solid or in the melt state;
(b) providing a hexamethylenediamine-rich component in the melt state;
(c) contacting the adipic acid-rich component with the hexamethylenediamine rich component in the melt state at an intermediate degree of dehydration in one or more steps at temperatures which retain the melt state of the combined proportions of the adipic acid-rich component and the hexamethylenediamine-rich component and which are stable to solidification but which are below the high temperatures required to prevent solidification at complete dehydration, and at a temperature that evaporation of diamine and complete dehydration are avoided.
(d) after stoichiometric balance is achieved, applying heat to the resulting mixture, in the absence of added aqueous or organic solvents, to cause polycondensation to a high molecular weight polyamide.

2. The process of Claim 1 wherein the adipic acid-rich component consists of adipic acid and hexamethylenediamine in mole proportion greater than 1.

3. The process of Claim 1 wherein the adipic acid-rich component consists of adipic acid and hexamethylenediamine in molar proportion of about 77:23 which corresponds to a proportion by weight of about 81:19.

4. The process of Claim 1 wherein the hexamethylenediamine-rich component consists of hexamethylenediamine and adipic acid in proportion greater than 1.

5. The process of Claim 1 wherein the adipic acid-rich component and the hexamethylenediamine-rich component are contacted in non-stoichiometric combined proportion at temperatures lower than those required to prevent solidification at complete dehydration.

6. The process of Claim 1 wherein the adipic acid-rich component and the hexamethylenediamine-rich component are contacted in non-stoichiometric combined proportion at temperatures lower than the melt temperatures for the combined proportion where complete dehydration is avoided.

7. The process of Claim 1 wherein the adipic acid-rich component and the hexamethylenediamine-rich component are contacted in stoichiometric combined proportion at temperatures lower than the melt temperature for the combined stoichiometric proportion where complete dehydration is avoided.

8. The process of Claim 1 wherein adipic acid and hexamethylenediamine are contacted in stoichiometric combined proportion for degrees of dehydration between 0.15 and 0.60 and at temperatures lower than the melt temperature of 195-200°C for the nylon 66 salt where complete dehydration is avoided.

9. The process of Claim 1 wherein adipic acid and hexamethylenediamine are contacted in stoichiometric combined proportion for degree of dehydration between 0.25 and 0.50 and at temperatures lower than 180°C where, at atmospheric pressure, vaporization of diamine is avoided.

## Patentansprüche

1. Verfahren zur Herstellung von Nylon 66, bestehend aus:
(a) Bereitstellen einer adipinsäurereichen Komponente in festem oder im Schmelzzustand;
(b) Bereitstellen einer hexamethylendiaminreichen Komponente im Schmelzzustand;
(c) Inkontaktbringen der adipinsäurereichen Komponente mit der hexamethylendiaminreichen Komponente im Schmelzzustand bei einem intermediären Dehydratisierungsgrad in einem oder mehreren Schritten bei Temperaturen, welche den Schmelzzustand der vereinigten Anteile der adipinsäurereichen Komponente und der hexamethylendiaminreichen Komponente erhalten und welche stabil gegenüber Verfestigung sind, aber welche unterhalb der hohen Temperaturen sind, die erforderlich sind, um Verfestigung bei vollständiger Dehydratisierung zu verhindern, und bei einer Temperatur, daß Verdampfung von Diamin und vollständige Dehydratisierung vermieden werden;
(d) nachdem stöchiometrischer Ausgleich erreicht ist, Anwenden von Wärme auf das so erhaltene Gemisch in Abwesenheit von zugesetzten wäßrigen oder organischen Lösungsmitteln, um Polykondensation zu einem Polyamid mit hohem Molekulargewicht zu bewirken.

2. Verfahren nach Anspruch 1, wobei die adipinsäurereiche Komponente aus Adipinsäure und Hexamethylendiamin im Molverhältnis von größer als 1 besteht.

3. Verfahren nach Anspruch 1, wobei die adipinsäurereiche Komponente aus Adipinsäure und Hexamethylendiamin im Molverhältnis von etwa 77:23 besteht, welches einem Gewichtsverhältnis von etwa 81:19 entspricht.

4. Verfahren nach Anspruch 1, wobei die hexamethylendiaminreiche Komponente aus Hexamethylendiamin und Adipinsäure im Verhältnis von größer als 1 besteht.

5. Verfahren nach Anspruch 1, wobei die adipinsäurereiche Komponente und die hexamethylendiaminreiche Komponente in nichtstöchiometrischem vereinigten Verhältnis bei Temperaturen, die niedriger sind als diejenigen, die erforderlich sind, um Verfestigung bei vollständiger Dehydratisierung zu verhindern, in Kontakt gebracht werden.

6. Verfahren nach Anspruch 1, wobei die adipinsäurereiche Komponente und die hexamethylendiaminreiche Komponente in nichtstöchiometrischem vereinigten Verhältnis bei Temperaturen, die niedriger sind als die Schmelztemperaturen für das vereinigte Verhältnis, in Kontakt gebracht werden, wobei vollständige Dehydratisierung vermieden wird.

7. Verfahren nach Anspruch 1, wobei die adipinsäurereiche Komponente und die hexamethylendiaminreiche Komponente in stöchiometrischem vereinigten Verhältnis bei Temperaturen, die niedriger sind als die Schmelztemperatur für das vereinigte stöchiometrische Verhältnis, in Kontakt gebracht werden, wobei vollständige Dehydratisierung vermieden wird.

8. Verfahren nach Anspruch 1, wobei Adipinsäure und Hexamethylendiamin in stöchiometrischem vereinigten Verhältnis für Dehydratisierungsgrade zwischen 0,15 und 0,60 und bei Temperaturen, die niedriger sind als die Schmelztemperatur von 195-200°C für das Nylon-66-Salz, in Kontakt gebracht werden, wobei vollständige Dehydratisierung vermieden wird.

9. Verfahren nach Anspruch 1, wobei Adipinsäure und Hexamethylendiamin in stöchiometrischem vereinigten Verhältnis für einen Dehydratisierungsgrad zwischen 0,25 und 0,50 und bei Temperaturen von weniger als 180°C in Kontakt gebracht werden, wobei bei atmosphärischem Druck Verdampfung von Diamin vermieden wird.

## Revendications

1. Procédé pour la fabrication de nylon 66 consistant:
(a) à fournir un composant riche en acide adipique à l'état solide ou fondu;
(b) à fournir un composant riche en hexaméthylènediamine à l'état fondu;
(c) à mettre en contact le composant riche en acide adipique avec le composant riche en hexaméthylènediamine à l'état fondu à un degré intermédiaire de déshydratation en une ou plusieurs étapes à des températures qui conservent l'état fondu des proportions combinées du composant riche en acide adipique et du composant riche en hexaméthylènediamine et qui sont stables vis-à-vis d'une solidification mais qui se trouvent en dessous des hautes températures requises pour empêcher une solidification à une déshydratation complète et à une température pour laquelle l'évaporation de la diamine et la déshydratation complète sont évitées;
(d) après l'obtention de l'équilibre stoechiométrique, à appliquer de la chaleur au mélange résultant, en l'absence d'ajout de solvants aqueux ou organiques, pour provoquer une polycondensation jusqu'à un polyamide à haut poids moléculaire.

2. Procédé suivant la revendication 1, dans lequel le composant riche en acide adipique est constitué d'acide adipique et d'hexaméthylènediamine dans une proportion molaire supérieure à 1.

3. Procédé suivant la revendication 1, dans lequel le composant riche en acide adipique est constitué d'acide adipique et d'hexaméthylènediamine dans une proportion molaire d'environ 77:23 qui correspond à une proportion en poids d'environ 81:19.

4. Procédé suivant la revendication 1, dans lequel le composant riche en hexaméthylènediamine est constitué d'hexaméthylènediamine et d'acide adipique dans une proportion supérieure à 1.

5. Procédé suivant la revendication 1, dans lequel le composant riche en acide adipique et le composant riche en hexaméthylènediamine sont mis en contact en une proportion combinée non stoechiométrique à des températures inférieures à celles qui sont requises pour empêcher une solidification à une déshydratation complète.

6. Procédé suivant la revendication 1, dans lequel le composant riche en acide adipique et le composant riche en hexaméthylènediamine sont mis en contact en une proportion combinée non stoechiométrique à des températures inférieures aux températures de fusion pour la proportion combinée pour laquelle la déshydratation complète est évitée.

7. Procédé suivant la revendication 1, dans lequel le composant riche en acide adipique et le composant riche en hexaméthylènediamine sont mis en contact en une proportion combinée stoechiométrique à des températures inférieures à la température de fusion pour la proportion stoechiométrique combinée pour laquelle la déshydratation complète est évitée.

8. Procédé suivant la revendication 1, dans lequel l'acide adipique et l'hexaméthylènediamine sont mis en contact en une proportion combinée stoechiométrique pour des degrés de déshydratation compris entre 0,15 et 0,60 et à des températures inférieures à la température de fusion de 195-200°C pour le sel de nylon 66 pour laquelle la déshydratation complète est évitée.

9. Procédé suivant la revendication 1, dans lequel l'acide adipique et l'hexaméthylènediamine sont mis en contact en une proportion combinée stoechiométrique pour un degré de déshydratation compris entre 0,25 et 0,50 et à des températures inférieures à 180°C pour lesquelles, à la pression atmosphérique, l'évaporation de la diamine est évitée.
